# EUROPEAN PATENT APPLICATION

(11) **EP 2 952 341 A1**
(43) Date of publication of application: **09.12.2015**
(21) Application number: 15170438.4
(22) Date of filing: 03.06.2015
(51) Int. Cl.: B32B 3/00, F01D 11/12, F01D 11/00, F01D 25/14

(54) **BLADE OUTER AIR SEAL AND METHOD OF MANUFACTURE**

(30) Priority: 05.06.2014 US 201462008173 P
(71) Applicant: United Technologies Corporation, Hartford, CT 06101 (US)
(72) Inventor: FARRIS, John R., Hartford, CT Connecticut 06103 (US); SLAVENS, Thomas N., Hartford, CT Connecticut 06103 (US)
(74) Representative: Leckey, David Herbert

(57) **Abstract**

The present disclosure relates to gas turbine engine components (100), such as blade outer air seals and methods of manufacture. In one embodiment, a gas turbine engine component (100) includes a retention interface (110) formed by an additive manufacturing process. The gas turbine engine component can include a retention interface (110) having a pattern, and a thermal barrier layer (116) formed to the retention interface (110).

## Description

### FIELD

The present disclosure relates to components for a gas turbine engine and, more particularly, relates to gas turbine engine components having a retention interface formed by an additive manufacturing process.

### BACKGROUND

Gas turbine engines, particularly those used in aircraft, operate at high rotational speeds and high temperatures for increased performance and efficiency. The turbine of a modern gas turbine engine is typically of an axial flow design and includes a plurality of axial flow stages. Each axial flow stage can include a plurality of blades mounted radially at the periphery of a disk which is secured to a shaft. A plurality of duct segments surround the stages to limit the leakage of gas flow around the tips of the blades. These duct segments are located on the inner surface of a static housing or casing. The incorporation of the duct segments improves thermal efficiency because more work may be extracted from gas flowing through the stages as opposed to leaking around the blade tips.

Although the duct segments limit gas flow leakage around blade tips, these segments do not completely eliminate gas flow leakage. Minor amounts of gas flow around the blade tips detrimentally affect turbine efficiency. Thus, gas turbine engine designers proceed to great lengths to devise effective sealing structures to provide a radial surface along the flow path of the engine and seal the structure and increase turbine efficiency. However, any structure within the gas turbine engine may develop hot spots.

Current processes for manufacturing a blade outer air seal retention interface can be improved in effectiveness, and cost. Known processes may apply a thick metallic interface and may drill a large number of small holes into the interface. These holes are drilled into the interface in a uniform shape and depth.

Accordingly, there exists a need for a blade outer air seal and manufacturing process which is more cost effective and maintains turbine efficiency. In addition, there exists a need to manufacture a blade outer air seal retention interface where the pattern can be varied to aid in reducing heat and wear of a blade outer air seal and aid in maintaining turbine engine efficiency.

### BRIEF SUMMARY OF THE EMBODIMENTS

Disclosed and claimed herein are gas turbine engine components and methods for manufacturing. One embodiment is directed to gas turbine engine component including a substrate, and a retention interface formed on a surface of the substrate, wherein the retention interface is formed by an additive manufacturing process to include a pattern. The gas turbine engine component also includes a thermal barrier layer formed to the retention interface.

In one embodiment, the gas turbine engine component is at least one of a blade outer air seal, vane, turbine frame, and casing.

In one embodiment, the substrate is one or more structural layers or elements of the gas turbine engine component.

In one embodiment, the retention interface is formed by at least one of direct metal laser sintering, laser spray metal deposition, laser processing and metal deposition.

In one embodiment, the retention interface has a thickness within the range of 1 to 50 µm.

In one embodiment, the retention interface is applied to the entirety of the substrate.

In one embodiment, the retention interface is applied to one or more discrete sections of the substrate.

In one embodiment, the pattern includes a base layer and a plurality of divots formed on the base layer.

In one embodiment, a ligament thickness of each divot is one of a uniform thickness and a tapered thickness.

In one embodiment, the gas turbine engine component includes a transition between regions where the retention interface is applied and the substrate, wherein the transition is at least one of a planar, and non-planar transition.

Another embodiment is directed to a method of manufacturing a gas turbine engine component. The method including forming a retention interface to a substrate, wherein the retention interface is formed by an additive manufacturing process to include a pattern and forming a thermal barrier layer on the retention interface.

In one embodiment, the substrate is one or more structural layers or elements of at least one of a blade outer air seal, vane, turbine frame, and casing.

In one embodiment, the method includes forming the retention interface to a substrate by at least one of direct metal laser sintering, laser spray metal deposition, laser processing and metal deposition.

In one embodiment, the method includes forming the retention interface to a substrate with a thickness within the range of 1 to 50 µm.

In one embodiment, the method includes forming the retention interface to a substrate is applied to the entirety of the substrate.

In one embodiment, the method includes forming the retention interface to a substrate is applied to one or more discrete sections of the substrate.

In one embodiment, the method includes forming the retention interface to a substrate is built by a computer controlled at least one of direct metal laser sintering, laser spray metal deposition, laser processing and metal deposition general.

In one embodiment, the method includes forming the retention interface to a substrate by building in at least one direction a single layer at a time and each additional layer is built onto the previous constructed layer.

In one embodiment, the method includes forming the retention interface to a substrate includes forming a ligament thickness for each divot having one of a uniform thickness and a tapered thickness.

In one embodiment, the method includes forming a transition between regions where the retention interface is applied and the substrate, wherein the transition is at least one of a planar and non-planar transition.

Other aspects, features, and techniques will be apparent to one skilled in the relevant art in view of the following detailed description of the embodiments.

### BRIEF DESCRIPTION OF THE DRAWINGS

The features, objects, and advantages of the present disclosure will become more apparent from the detailed description set forth below when taken in conjunction with the drawings in which like reference characters identify correspondingly throughout and wherein:
FIG. 1 depicts a graphical representation of a blade outer air seal according to one or more embodiments;
FIGs. 2A-2C depict graphical representations of a retention interface according to one or more embodiments;
FIGs. 3A-3B depict graphical representations of a retention interface according to one or more embodiments;
FIG. 4 depicts a process for manufacturing a blade outer air seal according to one or more embodiments; and
FIGs. 5A-5B depict graphical representations of blade outer air seal according to one or more other embodiments.

### DETAILED DESCRIPTION OF THE EXEMPLARY EMBODIMENTS

### Overview and Terminology

One aspect of this disclosure relates to components, such as components for a gas turbine engine. In one embodiment, a retention interface is provided for components, such as one or more of blade outer air seals, vanes, turbine frames, casing, etc. In one embodiment, a blade outer air seal is a shroud portion or a section of a gas turbine engine between blades and an outer engine case. In one embodiment, a blade outer air seal may be formed by a plurality of body segments. As used herein, blade outer air seal may refer to an entire shroud, and/or segments of a shroud. According to another embodiment, a retention interface is provided for a blade outer air seal to allow for retention of a thermal barrier layer to surfaces of the blade outer air seal.

Another aspect of the disclosure relates to manufacturing gas turbine engine components, such as a blade outer air seal. In one embodiment, methods are provided for applying coatings to a blade outer air seal, such as a thermal barrier layer. In another embodiment, a method for forming a blade outer air seal includes forming a retention interface on a surface of a blade outer air seal. According to another embodiment, a retention interface may be formed by an additive manufacturing process. The retention interface may be formed to include a divot pattern.

As used herein, the terms "a" or "an" shall mean one or more than one. The term "plurality" shall mean two or more than two. The term "another" is defined as a second or more. The terms "including" and/or "having" are open ended (e.g., comprising). The term "or" as used herein is to be interpreted as inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

Reference throughout this document to "one embodiment," "certain embodiments," "an embodiment," or similar term means that a particular feature, structure, or characteristic described in connection with the embodiment is included in at least one embodiment. Thus, the appearances of such phrases in various places throughout this specification are not necessarily all referring to the same embodiment. Furthermore, the particular features, structures, or characteristics may be combined in any suitable manner on one or more embodiments without limitation.

### Exemplary Embodiments

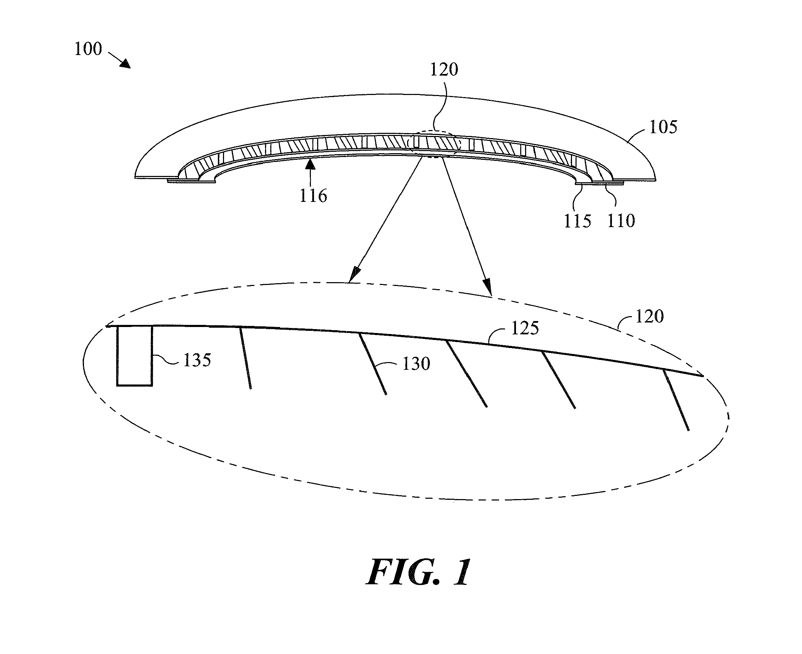

Referring now to the figures, FIG. 1 depicts a graphical representation of a gas turbine engine component, and in particular, a blade outer air seal according to one or more embodiments. In one embodiment, blade outer air seal **100** represents a portion of an engine shroud. In another embodiment, blade outer air seal **100** represents a portion or a section of a gas turbine engine between blades (e.g., fan, turbine, etc.) and an outer engine case. Blade outer air seal **100** can represent one of a plurality of body segments that form an engine shroud. Blade outer air seal **100** may relate to a segment of a segmented blade outer air seal that included a plurality of segments extending around the circumference of engine blades configured to limit air leakage between blades and the engine case. Blade outer air seal **100** may be employed for gas turbine engines, generators, etc.

In FIG. 1, a side representation is depicted of blade outer air seal **100**. As shown, blade outer air seal **100** may be one or a plurality of segments. It should also be appreciated that blade outer air seal **100** can relate to a particular stage or stages of a gas turbine engine. By way of example, blade outer air seal **100** may be part of a turbine or hot section of a gas turbine engine. According to one embodiment, blade outer air seal **100** includes substrate **105**, retention interface **110**, and thermal barrier layer **115**.

Substrate **105** is one or more structural layers or elements of a gas turbine engine component. Substrate **105** may be a structural element of a gas turbine engine, such as a shroud that is a metal or metal alloy structure. In one embodiment, retention interface **110** is applied to substrate **105**. Retention interface **110** may be applied to portions of substrate **105** which receive a thermal barrier layer **115**. By way of example, retention interface **110** may be applied and/or formed to an inner radial surface, shown as **116**, of substrate **105**. Inner radial surface **116** of blade outer air seal **100** may be a circumferential surface of blade element **100** that faces blades of a turbine engine.

In one embodiment, retention interface **110** and thermal layer **115** may relate to a protective coating applied to a gas turbine engine component, such as a blade outer air seal. In certain embodiments, portions of inner radial surface **116** of substrate **105** may not include retention interface **110** and thermal layer **115**. By way of example, retention interface **110** and thermal layer **115** may be applied to areas of a blade outer air seal **100** that experience high thermal stress. In some embodiments, portions of substrate **105** may not be covered by retention interface **110**. For example, retention interface **110** may be formed or applied to one or more portions of substrate **105.**

According to one or more embodiments, retention interface **110** may be applied to a substrate without requiring drilling or removal of bonding material to form divots. According to a further embodiment, application of retention interface **110** may allow for the formation of a geometric pattern or divot pattern that allows for improved adhesion of a thermal layer (e.g., thermal layer **115**).

According to one embodiment, retention interface **110** may be applied to substrate **105** by an additive manufacturing technique. As such, retention interface **110** may be formed to include a pattern of one or more divots (e.g., raised features) that allow for better adhesion of thermal layer **115**. According to another embodiment, retention interface **110** may include one or more of a base layer **125** and raised portions shown as **130** and **135**. Divots **130** and **135** may relate to raised portions, nodules, stacks or columns of material. An enlarged representation of retention interface **110** is shown as **120** in FIG. 1 for the purpose of illustration. Base layer **125** may be applied to substrate **105**. Divots **130** and **135** may be additively manufactured to base layer **125**. In certain embodiments, base layer **125** may be optional. According to another embodiment, the dimensions, placement, orientation and configuration of a pattern or divots included in retention interface **110** may allow for improved bonding and resilience of thermal layer **115**. As shown in FIG. 1, divets **130** extend outwardly and diagonally from base layer **125** and may be raised stacks of columns of material. According to one embodiment, by manufacturing divots **130** and **135** through an additive manufacturing process, retention interface does not requiring drilling, or other material removal, to provide divots or an abradable pattern in retention interface **110**. Divot **135** relates to a divot having a particular width and depth.

Thermal layer **115** may be a barrier layer to provide increased heat tolerance for sections of the blade outer air seal **100** and may be formed of Yttria-Stabilized Zirconia, or other elements. Substrate **105** may be formed of a cobalt or nickel alloy.

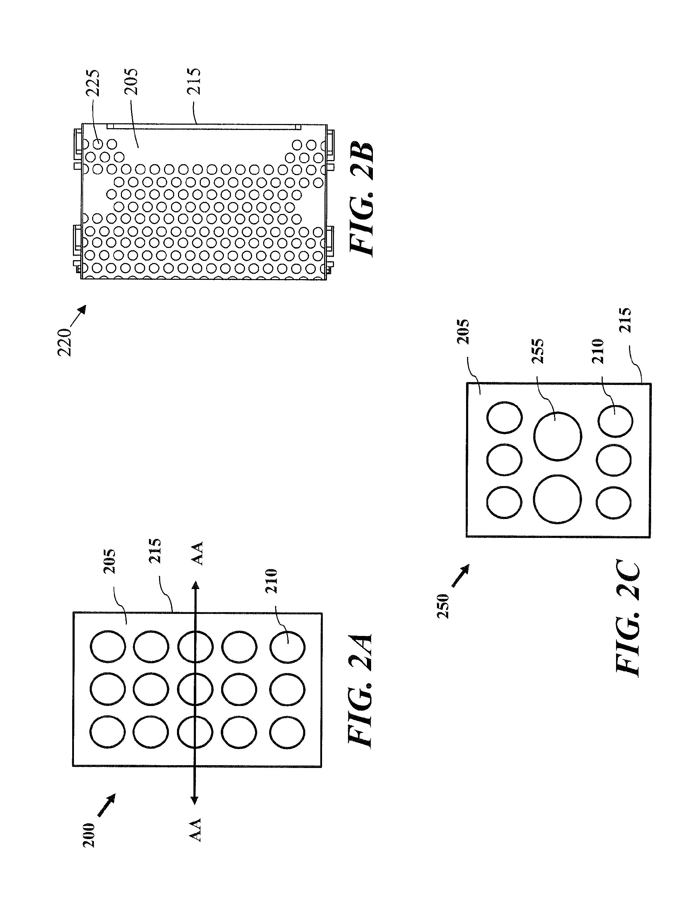

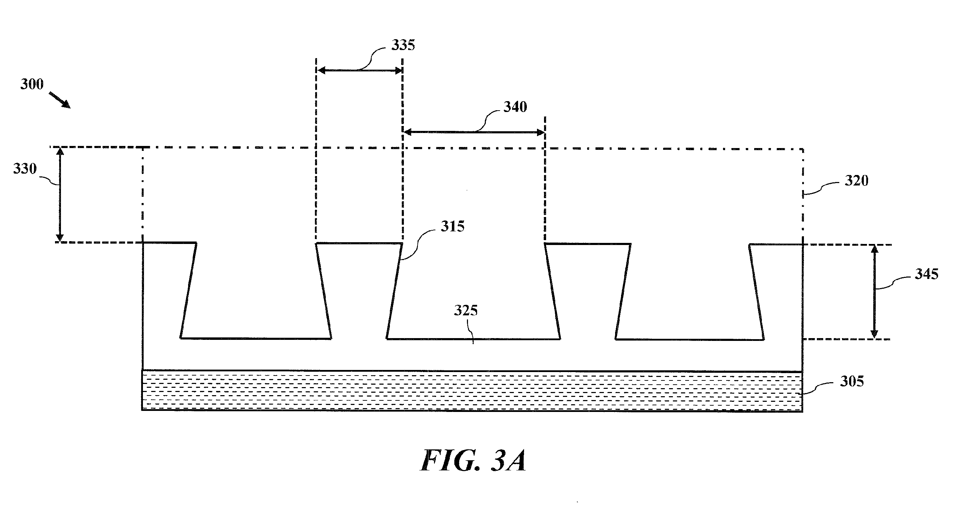

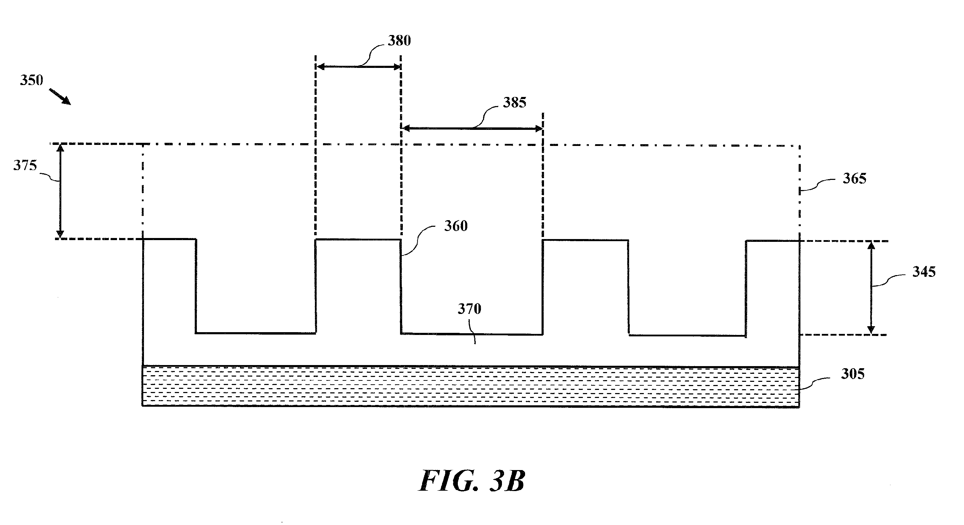

FIGs. 2A-2C depict top-down graphical representations of a retention interface, such as retention interface may be formed by an additive manufacturing process to include a divot pattern, according to one or more embodiments. In FIG. 2A, a top-down view is shown of a pattern, or divot pattern, according to one or more embodiments. Divot pattern **200** includes base retention interface layer **205** and a plurality of divots, such as divot **210**. According to one embodiment, a divot pattern may be the position, orientation, size and distribution of divots (e.g., retention interface material) that extend from a base retention interface layer. According to one embodiment, divots, such as divot **210**, may be formed with equal size and equal spacing. Base retention interface layer **205** may be applied to at least a portion of an inner radial surface of a blade outer air seal (e.g., blade outer air seal **100**). Divot pattern **200** may be formed as a retention interface by an additive manufacturing process to include a divot pattern wherein the divots, such as divot **210**, uniformly applied to the entirety of the base retention interface layer **205**. A cross-sectional view of divots in FIG. 2A are shown in FIGs. 3A and 3B.

In FIG. 2B, divot pattern **220** includes base retention interface layer **205** and a plurality of divots, such as divot **225**. According to one embodiment, divot pattern **220** is distributed only along a portion of base retention interface layer **205** (e.g., not formed along the entire base retention interface layer **205**). The retention interface of FIG. 2B is formed by an additive manufacturing process to include divot pattern **220** applied to sections of a blade outer air seal. Divot pattern **220** may be constructed uniformly or non-uniformly to discrete sections of the substrate.

In FIG. 2C, divot pattern **250** includes base retention interface layer **205** and a plurality of divots, such as divot **210** and divot **255**, wherein divot **255** is larger than divot **210**. The retention interface of FIG. 2C is formed by an additive manufacturing process to include divot pattern **250** applied to a blade outer air seal. Divot pattern **250** may be formed to include a nonuniform divot pattern wherein each divot may vary in size, shape, and depth etc.

According to one or more embodiments, a retention interface may be applied to a substrate of a blade outer air seal (e.g., blade outer air seal **100**) and/or other components to include one or more abradable features that does not require drilling or removal of retention interface material. According to a further embodiment, application and/or formation of a retention interface (e.g., retention interface **110**) may allow for the formation of divots extending above a base retention layer.

FIGs. 3A-3B depict graphical representations of a retention interface according to one or more embodiments. In FIG. 3A, a cross section of retention interface **200** of FIG. 2A is depicted along the line AA according to one embodiment. Retention interface **300** is formed to substrate **305** (e.g., substrate **105**) and includes a pattern having a plurality of divots (e.g., divot **210**). The retention interface **300** is formed by an additive manufacturing process to include divots, such as divot **315** (e.g., divot **210**). Thermal layer **320** is shown in FIG. 3A for illustration. According to one embodiment, thermal layer **320** may be built above divot **315** to a height **330** which may be with in the range of 1 to 0.50 cm.

Retention interface **300** includes a tapered divot pattern formed on base layer **325**. Divot **315** may have a width **335** and a height **345** above base layer **325**. Divot **315** may be formed with a ligament thickness **335** which may be tapered at the base of divot **335**. Retention interface thickness, divot depth **345**, divot spacing **340**, and ligament thickness **335** may be altered to aid in reducing heat and wear of a blade outer air seal. In certain embodiments, the transition between regions where the retention interface **300** is applied and the substrate **305** may be at least one of a planar and non-planar transition. Thermal layer **320** may be formed to retention interface **300** and may have a uniform or varying layer thickness **330**.

FIG. 3B depicts a cross section of retention interface **200** of FIG. 2A along the line AA according to another embodiment. Retention interface **350** is formed to substrate **305** (e.g., substrate **105**) and includes plurality of divots (e.g., divot **210**). The retention interface **350** is formed by an additive manufacturing process to include divots, such as divot **360** (e.g., divot **210**). Thermal layer **365** is shown in FIG. 3B for illustration. According to one embodiment, thermal layer **365** may be built above divot **360** by a height of **375** which may be with in the range of 1 to 0.5 cm.

Retention interface **350** includes a uniform thickness divot pattern formed on base layer **370**. Divot **360** may have a width **380** and a height **345** above base layer **370**. Divot **360** may be formed with a ligament thickness **380** which may be of a uniform thickness. Retention interface thickness, divot depth **345**, divot spacing **385**, and ligament thickness **380** may be altered to aid in reducing heat and wear of a blade outer air seal. In certain embodiments, the transition between regions where the retention interface **300** is applied and the substrate **305** may be at least one of a planar and non-planar transition. Thermal layer **365** may be formed to retention interface **350** and may have a uniform or varying layer thickness **375**.

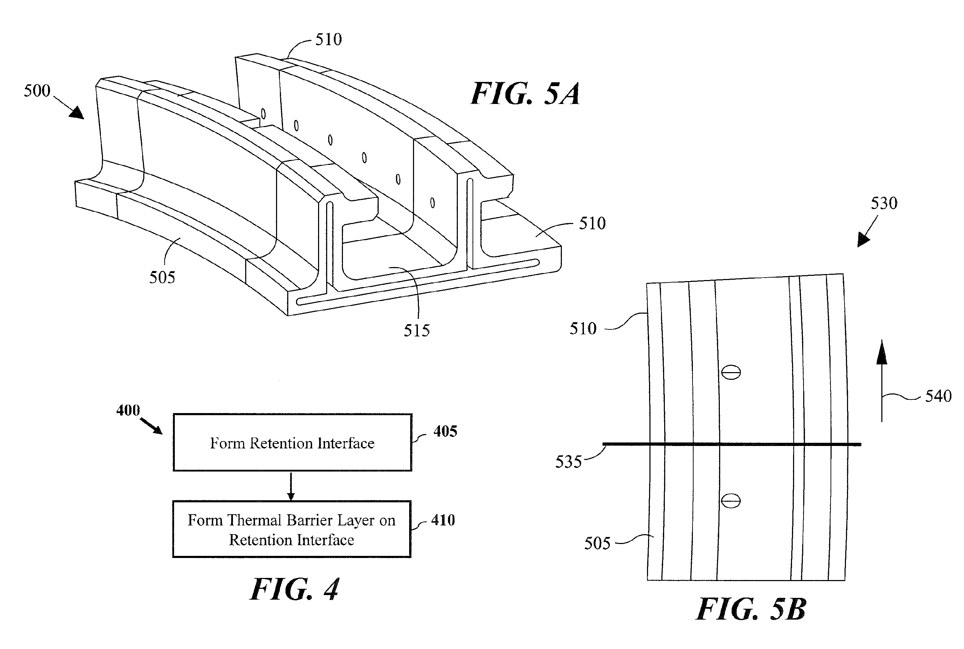

FIG. 4 depicts a process for manufacturing a gas turbine engine component, such as a blade outer air seal, according to one or more embodiments. Process **400** may be employed during manufacture of a blade outer air seal segment (e.g., blade outer air seal **100**). In certain embodiments, blade out air seals may be may be manufactured as segments to simplify manufacture and coating of parts. Process **400** may be initiated by forming a retention interface at block **405**. In one embodiment, the retention interface (e.g., retention interface **110**) is formed by an additive manufacturing process to include a divot pattern at block **405**. The divot pattern may be formed on a surface of a substrate at block **405** by at least one of direct metal laser sintering, laser spray metal deposition, laser processing and metal deposition general. In one embodiment, the retention interface is formed to a substrate with a thickness within the range of 1 to 50 µm. According to another embodiment, forming the retention interface to a substrate at block **405** includes formation of the retention interface to the entirety of the substrate. Alternatively, the retention interface to a substrate may be applied to discrete sections of the substrate.

According to another embodiment, forming the retention interface to a substrate at block **405** includes building divots by computer to control at least one of direct metal laser sintering, laser spray metal deposition, laser processing and metal deposition general. The retention interface may be formed to a substrate by building a single layer at a time in at least one direction and each additional layer is built onto the previous constructed layer. Formation at block **405** may include forming a ligament thickness of each divot to one of a uniform thickness and a tapered thickness. In certain embodiments, a substrate of a blade outer air seal may include a transition between regions where the retention interface is applied and the substrate. The transition may be at least one of a planar, and non-planar transition.

At block **410**, a thermal barrier may be formed on the retention interface. The thermal barrier may be formed of Yttria-Stabilized Zirconia, or other elements.

FIGs. 5A-5B depict graphical representations of blade outer air seal according to one or more other embodiments.

FIG. 5A depicts a blade outer air seal duct segment wherein a retention interface is formed on one or more discrete sections of the substrate according to one or more embodiments. Blade outer air seal **500** includes substrate **505** and duct segments **510** including a retention interface and thermal barrier layer. In that fashion, a retention interface may be applied to one or more discrete sections of blade outer air seal **500**. Retention regions **510** may be juxtaposed to non-retention regions **505**. In certain embodiments, the transition between retention regions **510** and non-retention regions **505** may be at least one of a planar and non-planar transition. FIG. 5A depicts blade outer air seal **500** as shrouded.

FIG. 5B depicts a graphical representation of a transition between retention interface region **510** and substrate **505**. According to one embodiment, transition **535** may be one of planar and non-planar, wherein the retention interface and thermal barrier is applied in build direction **540**.

While this disclosure has been particularly shown and described with references to exemplary embodiments thereof, it will be understood by those skilled in the art that various changes in form and details may be made therein without departing from the scope of the claimed embodiments.

## Claims

1. A gas turbine engine component (100) comprising:
a substrate (105;305);
a retention interface (110;205;300;350) formed on a surface of the substrate (105;300), wherein the retention interface (110;205;300;350) is formed by an additive manufacturing process to include a pattern; and
a thermal barrier layer (116;365) formed to the retention interface (110;205;300;350).

2. A method of manufacturing a turbine engine component comprising:
forming a retention interface (110;205;300;350) to a substrate (105;300), wherein the retention interface (110;205;300;350) is formed by an additive manufacturing process to include a pattern; and
forming a thermal barrier layer (116;365) on the retention interface (110;205;300;350).

3. The gas turbine engine component or method of claim 1 or 2, wherein the gas turbine engine component (100) is at least one of a blade outer air seal, vane, turbine frame, and casing.

4. The gas turbine engine component or method of any preceding claim, wherein the substrate (105;305) is one or more structural layers or elements of the gas turbine engine component.

5. The gas turbine engine component or method of any preceding claim, wherein the retention interface (110;205;300;350) is formed by at least one of direct metal laser sintering, laser spray metal deposition, laser processing and metal deposition.

6. The gas turbine engine component or method of any preceding claim, wherein the retention interface (110;205;300;350) has a thickness within the range of 1 to 50 µm.

7. The gas turbine engine component or method of any preceding claim, wherein the retention interface (110;205;300;350) is applied to the entirety of the substrate.

8. The gas turbine engine component or method of any preceding claim, wherein the retention interface (110;205;300;350) is applied to one or more discrete sections of the substrate (105;300).

9. The gas turbine engine component or method of any preceding claim, wherein the pattern includes a base layer (125;205;325) and a plurality of divots (130; 135;225;315) formed on the base layer (125;205;325).

10. The gas turbine engine component or method of claim 9, wherein a ligament thickness (335;380) of each divot is one of a uniform thickness and a tapered thickness.

11. The gas turbine engine component or method of any preceding claim, further comprising (forming) a transition between regions where the retention interface is applied and the substrate, wherein the transition is at least one of a planar, and non-planar transition.

12. The method of any of claims 2 to 11, including forming the retention interface (110;205;300;350) to a substrate (105;300) is built by a computer controlled at least one of direct metal laser sintering, laser spray metal deposition, laser processing and metal deposition general.

13. The method of any of claims 2 to 12, including forming the retention interface (110;205;300;350) to a substrate (105;300) by building in at least one direction a single layer at a time and each additional layer is built onto the previous constructed layer.

14. The method of any of claims 2 to 13, including forming the retention interface (110;205;300;350) to a substrate (105;300) includes forming a ligament thickness for each divot having one of a uniform thickness and a tapered thickness.
